# EUROPÄISCHE PATENTSCHRIFT

(11) **EP 4 083 657 B1**
(45) Veröffentlichungstag und Bekanntmachung des Hinweises auf die Patenterteilung: **26.07.2023**
(21) Anmeldenummer: 21170473.9
(22) Anmeldetag: 26.04.2021
(51) Int. Cl.: G01S 7/4911, G01S 7/4913, G01S 7/4912, G01S 7/493, G01S 17/34

(54) **FMCW-LIDAR-DISTANZMESSVORRICHTUNG**
FMCW LIDAR DISTANCE MEASURING DEVICE
DISPOSITIF DE MESURE DE DISTANCE LIDAR FMCW

(43) Veröffentlichungstag der Anmeldung: 02.11.2022
(73) Patentinhaber: SICK AG, 79183 Waldkirch (DE)
(72) Erfinder: Blöhbaum, Frank, 79211 Denzlingen (DE); Menzel, Christoph, 79211 Denzlingen (DE)
(74) Vertreter: Manitz Finsterwald Patent- und Rechtsanwaltspartnerschaft mbB

(56) Entgegenhaltungen:
- CN-A- 105 115 587
- GB-A- 2 307 369
- US-A1- 2008 174 762
- US-A1- 2018 170 720

## Beschreibung

Die vorliegende Erfindung betrifft eine FMCW-LiDAR-Distanzmessvorrichtung zur Messung großer Distanzen mit großer Messgenauigkeit, insbesondere zur Anwendung in Hafenanlagen oder bei großen Bauwerken.

Die Messung großer Distanzen mit hoher Genauigkeit stellt erhöhte Anforderungen an entsprechende Distanzmesssysteme. Bevorzugt werden heute optoelektronische Distanzmesssysteme eingesetzt. Vor allem Distanzmesssysteme basierend auf der Light Detection and Ranging (LiDAR)-Technologie sind in diesem Zusammenhang weit verbreitet. Eine Variante von LiDAR-Sensoren sind die sogenannten Frequency Modulated Continuous Wave (FMCW)-LiDAR-Sensoren, welche eine Distanzmessung auf Basis eines frequenzmodulierten Sendesignals durchführen. FMCW-LiDAR-Sensoren haben im Vergleich zu Time-of-Flight-LiDAR-Sensoren (ToF) den Vorteil, dass sie robuster gegenüber Störungen, wie beispielsweise einfallendem Sonnenlicht, sind.

Für die Automatisierung von Krananlagen in Häfen oder zur Überwachung der Bewegungen von Staumauern und Brücken werden dementsprechend häufig LiDAR-Sensoren verwendet. Oftmals ist in solchen Umgebungen die Messung großer Distanzen bei gleichzeitiger großer Messgenauigkeit gefordert. In Hafenanlagen beispielsweise ist für die Andockprozedur eines Containergeschirrs eines Krans an einen Container eine Messgenauigkeit im Millimeterbereich nötig. An dem Kran können beim Verladen von Containern jedoch starke Vibrationen auftreten. Die Distanzmessvorrichtung kann aufgrund der Vibrationsbelastung daher nicht direkt z.B. an dem Containergeschirr befestigt werden. Stattdessen muss sie an einem weniger stark vibrationsbelasteten Ort befestigt werden, beispielsweise an einem feststehenden Objekt neben dem Kran. Dadurch entstehen zwangsläufig große Distanzen zwischen dem Messobjekt (d.h. dem Container) und der Distanzmessvorrichtung. Trotz der großen Distanzen muss die Distanzmessvorrichtung jedoch weiterhin die hohe geforderte Messgenauigkeit bereitstellen können.

Das Problem von herkömmlichen FMCW-LiDAR-Systemen besteht darin, dass für große Objektentfernungen von beispielsweise 150 m die systembedingte Messgenauigkeit im Zentimeterbereich liegt. Eine realistische Messgenauigkeit bei einer Objektentfernung von 150 m liegt beispielsweise bei 9,4 cm. Die Messgenauigkeit solcher Systeme ist demnach für eine Anwendung, die eine Messgenauigkeit im Millimeterbereich erfordert, um den Faktor 100 zu ungenau.

GB 2307369 A offenbart ein Laserabbildungssystem, bei dem ein von Objekten zurückgestrahltes Signal gemeinsam mit einem Teil eines ausgesendeten Signals gemischt wird, um ein erstes Zwischenfrequenzsignal zu erhalten, wobei das erste Zwischenfrequenzsignal mit einem Signal eines spannungsgesteuerten Oszillators gemischt wird, um ein zweites Zwischenfrequenzsignal zu erhalten, das mit einem Bandpassfilter gefiltert wird. US 2008/174762 A1 offenbart eine Distanzmessvorrichtung, welche zwei Mikrospiegel nutzt, um Sendelicht in verschiedene Richtungen abzulenken, um eine Distanz und eine Position eines Objekts in einem Messbereich mittels einer Mischung eines Sendesignals mit einem Empfangssignal zu bestimmen. US 2018/170720 A1 lehrt eine Kranvorrichtung, welche ausgebildet ist, um Lasten mittels Greifer zu transportieren, wobei die Kranvorrichtung ferner über Distanzmessgeräte verfügt, welche eine Distanz zwischen zwei Objekten der Vorrichtung bestimmt. CN 105115587 A beschreibt eine Vorrichtung und Methode zur Echtzeitüberwachung eines Gebäudes mit einem Laserscanner.

Es ist daher die der Erfindung zugrundeliegende Aufgabe, eine verbesserte FMCW-LiDAR-Distanzmessvorrichtung anzugeben.

Diese Aufgabe wird durch eine FMCW-LiDAR-Distanzmessvorrichtung gemäß Anspruch 1 gelöst.

Die FMCW-LiDAR-Distanzmessvorrichtung umfasst eine Lichtquelle, insbesondere einen Laser, der einen frequenzmodulierten Sendelichtstrahl als ein Sendesignal mit einem vorbestimmten Frequenzhub erzeugt und in einen Messbereich entsendet. Die Distanzmessvorrichtung umfasst einen Lichtempfänger, welcher ausgebildet ist, von Objekten in dem Messbereich zurückgestrahltes Licht als Empfangssignal zu empfangen. Die Distanzmessvorrichtung umfasst ferner einen Mischer, der ausgebildet ist, zumindest einen Teil des Sendesignals mit dem Empfangssignal und mit einer Oszillatorfrequenz zu mischen, um ein Mischsignal zu generieren, wobei die Distanzmessvorrichtung beispielsweise ausgebildet ist, die Oszillatorfrequenz an einen gewünschten Messbereich anzupassen. Ferner umfasst der Mischer eine Avalanche-Photodiode, APD, welche ausgebildet ist, die Mischung zumindest eines Teils des Sendesignals und des Empfangssignals und einer mit der Oszillatorfrequenz beaufschlagten Vorspannung der APD durchzuführen.

Anders ausgedrückt, erzeugt ein Laser einen frequenzmodulierten Sendelichtstrahl als ein Sendesignal mit einem vorbestimmten Frequenzhub und entsendet diesen Sendelichtstrahl in einen Messbereich. Der Sendelichtstrahl wird von Objekten in dem Messbereich zurückgestrahlt und das zurückgestrahlte Licht als Empfangssignal am Lichtempfänger empfangen. Ein Teil des Sendesignals kann mit dem Empfangssignal im Mischer zu einem vorläufigen Mischsignal gemischt werden, welches weiterhin mit einer Oszillatorfrequenz gemischt werden kann.

Der Frequenzhub kann beispielsweise dadurch erzeugt werden, dass die Wellenlänge der optischen Strahlung des Sendelichtstrahls z.B. beginnend bei einer unteren Frequenz (fu) in einer Modulationszeitdauer (Tmod) bis zu einer oberen Frequenz (fo) geändert wird (oder umgekehrt). Eine Messdauer (Tmeas), während der die Distanzmessvorrichtung die Mischfrequenz des Mischsignals bestimmt, kann maximal der Modulationszeitdauer abzüglich der Lichtlaufzeit (Ttof; hin- und zurück) bis zu einem Objekt in der maximalen Messentfernung entsprechen (Tmeas = Tmod - Ttof). Die Messdauer ist bevorzugt kürzer als 10 µs, besonders bevorzugt kürzer als 5 µs.

Bei der Mischung des Sendesignals und des Empfangssignals werden somit zwei Signale mit unterschiedlicher Frequenz gemischt. Der Frequenzunterschied zwischen dem Sende- und dem Empfangssignal hängt dabei von der Entfernung des rückstrahlenden Objekts zur Distanzmessvorrichtung ab. Je größer die Entfernung, desto größer ist der Frequenzunterschied.

Bei der Mischung (oder auch Überlagerung) des Sendesignals und des Empfangssignals entstehen z.B. vorläufige Mischfrequenzen, die der Summe und der Differenz der Frequenzen von Sende- und Empfangssignal entsprechen. Insbesondere wird die vorläufige Mischfrequenz weiterverarbeitet, die der Differenz der Frequenzen von Sende- und Empfangssignal entspricht. Diese Frequenz wird auch als Beatfrequenz bezeichnet.

Aus der Beatfrequenz, welche durch die Mischung entsteht, kann, insbesondere nach einer Analog-Digital-Wandlung des Mischsignals durch einen Analog-Digital-Converter (ADC), die Lichtlaufzeit und somit die Entfernung des Objekts geschlussfolgert werden.

Es ist ersichtlich, dass die Beatfrequenz mit steigender Objektentfernung zunimmt, da mit steigender Objektentfernung - durch den Frequenzhub - ein immer größerer Frequenzunterschied zwischen dem Sende- und dem Empfangssignal entsteht. Für eine hohe Messgenauigkeit muss der Frequenzhub zudem sehr groß gewählt werden, was die Beatfrequenz weiter erhöht. Beispielsweise kann die Beatfrequenz bei einer geforderten Messgenauigkeit von 1mm bei einer Objektentfernung von 150m bei etwa 40 GHz liegen, wie nachfolgend genauer erläutert wird. Frequenzen im Bereich von 40 GHz sind aber nur mit großem Aufwand und hohen Kosten zu digitalisieren und auszuwerten.

Es wird nun rein beispielhaft von der oben genannten Messgenauigkeit (d.h. Entfernungsauflösung) von 1mm auf eine maximale Messentfernung von 150m ausgegangen. Der Frequenzhub wird dabei auf 200 GHz festgelegt, wobei dieser Frequenzhub innerhalb von 5 µs Modulationszeitdauer durchlaufen wird. Die sogenannte Chirprate ergibt sich damit zu 40 GHz/ps.

Die Lichtlaufzeit zu einem Objekt in 150m Entfernung beträgt für den einfachen Weg 0,5 µs. Hin- und zurück ergibt sich eine Lichtlaufzeit von 1 µs, welche einen Frequenzunterschied von Sende- und Empfangssignal von 40 GHz nach sich zieht. Die Beatfrequenz ist dementsprechend ebenfalls 40 GHz.

Ändert sich die Objektentfernung nun um 1mm, so ändert sich die Beatfrequenz um 0,267 MHz, also um 0,000667%. Daraus resultieren für die Analog-Digital-wandlung des Mischsignals (nicht nur) unter Kostengesichtspunkten kaum zu lösende technische Schwierigkeiten: Der ADC müsste das Mischsignal mit einer Samplingfrequenz von mindestens 80GHz abtasten, um dem Abtasttheorem zu genügen. Bei einer Messdauer von 4µs ergeben sich daraus 320.000 Abtastwerte. Die so gewonnenen Zahlenwerte müssten zunächst mit einer Datenrate von 80GHz in einem Zwischenspeicher abgelegt und eine FFT (Fast Fourier Transformation) berechnet werden, um den Wert der Beatfrequenz zu bestimmen. Weder ADCs noch Speicher sind derzeit für derart hohe Datenraten bzw. Samplingfrequenzen kommerziell verfügbar.

Aus diesem Grund sieht die Erfindung eine Mischung von Sende- und Empfangssignal mit der Oszillatorfrequenz vor. Die Oszillatorfrequenz kann z.B. geringfügig höher als die Beatfrequenz gewählt werden, im obigen Beispiel könnten 40,1 GHz verwendet werden.

Durch die Mischung mit der Oszillatorfrequenz entsteht insbesondere das Mischsignal mit einer Mischfrequenz, welche die Differenz von Beatfrequenz und Oszillatorfrequenz ist. Bei einer Objektentfernung von 150m beträgt die Mischfrequenz im obigen Beispiel 100 MHz (40,1 GHz - 40,0 GHz). Bei 149m Objektentfernung beträgt die Mischfrequenz 366,7 MHz (40, 1 GHz - 39,7333 GHz).

Ändert sich die Objektentfernung jetzt um 1mm, so ändert sich die Mischfrequenz des Mischsignals wiederum um 0,267 MHz, was nun aber einer Änderung von 0,73% entspricht.

In einem gewünschten Messbereich, der sich beispielhaft von 149m bis 150m erstreckt, liegt die Mischfrequenz zwischen 100 MHz und 366,7 MHz. Dementsprechend kann die Distanzmessvorrichtung ausgebildet sein, Mischfrequenzen in einem vorgegebenen Frequenzbereich zu erfassen, wobei der vorgegebene Frequenzbereich beispielsweise zwischen 100 MHz und 400 MHz liegen kann. Für diesen Fall kann ein ADC mit einer Samplingfrequenz von beispielsweise 800MHz eingesetzt werden. Derartige ADCs inklusive Dualport-RAM zur echtzeitfähigen Ablage der Daten sind grundsätzlich bekannt. Das erfindungsgemäße Verfahren reduziert die Anforderungen an die Hardware signifikant, so dass eine Realisierung in einem industriell tauglichen Sensorsystem möglich wird.

Befindet sich das zu messende Objekt deutlich außerhalb des gewünschten Messbereichs, z.B. bei mehr als 160m, so kann eine Distanzmessung des Objekts nicht mehr möglich sein, da die Mischfrequenz dann außerhalb des vorgegebenen Frequenzbereichs liegen kann.

Erfindungsgemäß wird somit eine sehr hohe Messgenauigkeit im gewünschten Messbereich mit real verfügbaren Bauelementen erzielt. Dabei kann während der Messung im selben gewünschten Messbereich die Modulationszeitdauer und/oder die Samplingfrequenz des ADCs konstant gehalten werden. Insbesondere kann die Distanzmessvorrichtung ausgebildet sein, zur Anpassung des gewünschten Messbereichs alleine die Oszillatorfrequenz zu verändern und beispielsweise die Modulationszeitdauer und/oder die Samplingfrequenz des ADCs unverändert zu belassen. Die so erzielte Anpassung des gewünschten Messbereichs kann beispielsweise zum Auffinden eines Objekts dienen.

Durch die erfindungsgemäße Änderung der Oszillatorfrequenz kann insbesondere die Entfernung des gewünschten Messbereichs von der Distanzmessvorrichtung geändert werden. Die Größe des gewünschten Messbereichs (d.h. die Erstreckung, beispielsweise eine Erstreckung von 1m im Bereich von 149m bis 150m) und/oder die Messgenauigkeit im gewünschten Messbereich können hingegen bei einer Änderung der Oszillatorfrequenz alleine gleich bleiben. Im Gegenzug für die hohe Messgenauigkeit wird dafür aber auf die Möglichkeit einer Messung - ohne Änderungen an der Distanzmessvorrichtung oder z.B. der Modulationszeitdauer oder der Samplingfrequenz des ADCs - in einem großen Bereich von Entfernungen verzichtet.

Um die Distanzmessvorrichtung an verschiedene Messbereiche (d.h. gewünschte Messbereiche) anzupassen, ist erfindungsgemäß vorgesehen, die Oszillatorfrequenz an den gewünschten Messbereich anzupassen. Insbesondere bleibt dabei die Modulationszeitdauer und/oder die Samplingfrequenz des ADCs konstant. Soll - im obigen Beispiel - nun eine Messung bei 120m Objektentfernung erfolgen, d.h. in einem gewünschten Messbereich von z.B. 119m - 120m, so kann die Oszillatorfrequenz auf 32,1 GHz eingestellt werden (bei 120m Objektentfernung ergibt sich eine Beatfrequenz von 32 GHz). Dann stellen sich für den gewünschten Messbereich von 119m - 120m wiederum Mischfrequenzen zwischen 100 MHz und 366, 7 MHz ein. Da es sich um dieselben Mischfrequenzen handelt, können diese mit den vorhandenen Bauteilen ohne Anpassung erfasst werden.

Die erfindungsgemäße Distanzmessvorrichtung vereint somit eine hohe Messgenauigkeit (auch bei großen Distanzen) mit einer Einstellbarkeit des gewünschten Messbereichs.

Der gewünschte Messbereich kann z.B. über ein Datensignal von extern empfangen werden, woraufhin dann die Oszillatorfrequenz an den gewünschten Messbereich angepasst wird. Danach können dann Distanzmessungen durch die Distanzmessvorrichtung erfolgen.

Nachfolgend sind noch weitere Aspekte der Distanzmessvorrichtung erläutert.

Der Messbereich ist bevorzugt der Bereich, in welchen die FMCW-LiDAR-Distanzmessvorrichtung den Sendelichtstrahl entsenden kann, wobei der Messbereich sich bis zu einer maximalen Messentfernung erstreckt, in welcher eine Distanzmessung eines Objekts gerade noch möglich ist. Der Messbereich kann beispielsweise dadurch begrenzt sein, dass außerhalb der maximalen Messentfernung rückgestrahltes Licht nicht mehr von dem Lichtempfänger detektiert werden kann. Der gewünschte Messbereich befindet sich bevorzugt zumindest teilweise innerhalb des Messbereichs.

Der gewünschte Messbereich kann beispielsweise genau eine Messdistanz oder ein Messfenster sein. Die Ausdehnung/Erstreckung des gewünschten Messbereichs ist in der Regel vergleichsweise klein zur maximalen Messentfernung der Distanzmessvorrichtung. Beispielsweise beträgt die Ausdehnung des gewünschten Messbereichs weniger als 2% oder weniger als 1 % der maximalen Messentfernung der Distanzmessvorrichtung.

Gemäß einer weiteren Ausführungsform ist die Distanzmessvorrichtung ausgebildet, eine Modulationszeitdauer, eine Samplingfrequenz des ADCs und die Oszillatorfrequenz unabhängig oder in Abhängigkeit voneinander an den gewünschten Messbereich anzupassen.

Beispielsweise kann für die Bestimmung der Entfernung von Objekten in einem größeren gewünschten Messbereich (d.h. in einem gewünschten Messbereich mit einer größeren Erstreckung) die Modulationszeitdauer und gegebenenfalls die Messdauer verlängert werden. Zudem kann die Oszillatorfrequenz zum Mischen mit der Sende- und Empfangsfrequenz und die Samplingfrequenz des ADCs reduziert werden. Die Modulationszeitdauer, die Samplingfrequenz des ADCs und die Oszillatorfrequenz können bevorzugt so in Abhängigkeit voneinander angepasst werden, dass die Anzahl der von dem ADC gelieferten Datenpunkte während der Messdauer konstant bleibt. In einem anderen Beispiel können die Modulationszeitdauer, die Oszillatorfrequenz und die Samplingfrequenz unabhängig voneinander eingestellt werden. Mit anderen Worten können die Modulationszeitdauer und/oder die Samplingfrequenz des ADCs und/oder Oszillatorfrequenz an den gewünschten Messbereich angepasst werden.

So kann die Modulationszeitdauer z.B. für das Intervall von 110m - 120m von 5µs auf 50µs verlängert werden. Es ergibt sich somit eine maximale Beatfrequenz von 3,2GHz. Die maximale Änderung der Beatfrequenz bei einer Änderung der Entfernung des Objektes von 120m auf 110m ist in diesem Beispiel nunmehr 266,7MHz. Die Frequenz des Oszillatorsignales wird jetzt z.B. auf 3,21 GHz eingestellt, so dass sich Mischfrequenzen von 10MHz - 277,7MHz ergeben. Die Samplingfrequenz und die Messdauer können konstant gehalten werden. Alternativ kann für dieses Beispiel die Samplingfrequenz des ADCs um den Faktor 10 reduziert werden, wobei gleichzeitig die Messdauer ebenfalls entsprechend um den Faktor 10 verlängert werden kann.

Für das grobe Auffinden des Objektes können beispielsweise die Parameter Modulationszeitdauer, Oszillatorfrequenz für das Mischen mit dem Sende- und Empfangssignal sowie die Samplingfrequenz des ADCs unabhängig voneinander oder in Abhängigkeit voneinander so geändert werden, dass eine Intervallschachtelung des zu überwachenden Messbereiches erfolgt und dabei die Messwertauflösung den jeweiligen Erfordernissen angepasst wird.

Gemäß einer weiteren Ausführungsform ist die Distanzmessvorrichtung ausgebildet, die Modulationszeitdauer, die Samplingfrequenz des ADCs und die Oszillatorfrequenz in einer ersten Phase an einen größeren gewünschten Messbereich und in einer darauffolgenden zweiten Phase an einen kleineren gewünschten Messbereich anzupassen. "Größer" und "kleiner" beziehen sich dabei auf die Größe der Erstreckung des gewünschten Messbereichs.

Dies bedeutet, dass z.B. mit einer groben Auflösung von z.B. 10cm in einem größeren gewünschten Messbereich das Objekt gesucht wird und anschließend Oszillatorfrequenz und/oder Samplingfrequenz und/oder Modulationszeit- und Messdauer den höheren Anforderungen der Entfernungsauflösung (z.B. 1mm Entfernungsauflösung) in einem kleineren gewünschten Messbereich entsprechend umgeschaltet werden.

Dieser Vorgang kann automatisch und/oder adaptiv erfolgen. Beispielsweise kann die Distanzmessvorrichtung für das grobe Auffinden des Objekts die Oszillatorfrequenz und/oder Samplingfrequenz und/oder Modulationszeitdauer und/oder Messdauer an einen größeren gewünschten Messbereich anpassen und nach einer ersten Entfernungsmessung die Oszillatorfrequenz und/oder Samplingfrequenz und/oder Modulationszeitdauer und/oder Messdauer automatisch an einen der ersten Entfernungsmessung entsprechenden kleineren gewünschten Messbereich anpassen. Umgekehrt kann die Distanzmessvorrichtung die Oszillatorfrequenz und/oder Samplingfrequenz und/oder Modulationszeitdauer und/oder Messdauer an einen kleineren gewünschten Messbereich anpassen und nach einer ersten Entfernungsmessung die Oszillatorfrequenz und/oder Samplingfrequenz und/oder Modulationszeitdauer und/oder Messdauer automatisch an einen größeren gewünschten Messbereich anpassen.

Die Modulation des Sendesignals kann z.B. durch eine abstimmbare Lichtquelle erfolgen. Der Frequenzhub des Sendesignals kann fest vorgegeben sein. Der Frequenzhub ist dementsprechend insbesondere nicht automatisch veränderbar, um unerwünschte Effekte in der Optik zu verhindern.

Weitere Ausführungsformen der Erfindung sind der Beschreibung, den Unteransprüchen sowie den Zeichnungen zu entnehmen.

Ferner umfasst der Mischer eine Avalanche-Photodiode (APD), welche die Mischung des zumindest einen Teils des Sendesignals und des Empfangssignals und einer mit der Oszillatorfrequenz beaufschlagten Vorspannung der APD durchführt.

Durch die Beaufschlagung der Vorspannung der APD erfolgt die Mischung zweier optischer und eines elektrischen Signals in einem Bauteil, nämlich der APD. Aufgrund der geringeren Anzahl der verwendeten Bauteile ist diese Ausführungsform besonders platzsparend und kosteneffizient.

Grundsätzlich kann die Mischung des Sende- und Empfangssignals sowie der Oszillatorfrequenz auf beliebige Weise erfolgen.

Zusätzlich kann das Sendesignal und/oder Empfangssignal und/oder Mischsignal vor und/oder nach der Mischung verstärkt werden.

Die erwartete Beatfrequenz kann der Beatfrequenz genau einer Entfernung aus dem gewünschten Messbereich entsprechen, bevorzugt der größten oder kleinsten Entfernung aus dem gewünschten Messbereich.

Gemäß einer weiteren Ausführungsform ist die Distanzmessvorrichtung ausgebildet, im Betrieb zwischen zumindest zwei gewünschten Messbereichen umzuschalten und die Oszillatorfrequenz an den (gerade gültigen) gewünschten Messbereich anzupassen. Die Umschaltung kann im laufenden Betrieb erfolgen, beispielsweise kann eine erste Messung mit einer ersten gewünschten Messdistanz durchgeführt werden und eine darauffolgende zweite Messung mit einer zweiten gewünschten Messdistanz. Insbesondere wird die Oszillatorfrequenz vor der Durchführung einer jeweiligen Messung eingestellt.

Gemäß einer weiteren Ausführungsform weist der Frequenzhub des frequenzmodulierten Sendelichtstrahls eine periodische, stückweise lineare Form auf. Beispielsweise weist der Frequenzhub, d.h. die Frequenz des Sendelichtstrahls über die Zeit gesehen, die Form einer Sägezahnfunktion oder Dreieckswellenfunktion auf. Der Frequenzhub kann jedoch jede andere periodische, stückweise lineare Funktion umfassen. Der Frequenzhub kann ferner eine periodische, nicht lineare Form aufweisen.

Gemäß einer weiteren Ausführungsform weist die Distanzmessvorrichtung einen Analog-Digital-Converter (ADC) auf, welcher das Mischsignal in ein digitales Mischsignal überführt. Bevorzugt ist die Distanzmessvorrichtung ausgebildet, das digitale Mischsignal mittels einer schnellen Fouriertransformation in den Frequenzbereich zu überführen. Durch die schnelle Fouriertransformation können die Frequenzanteile des Mischsignals bestimmt werden. Die schnelle Fouriertransformation wird bevorzugt im Digitalraum durchgeführt, beispielsweise durch einen DSP (Digital Signal Processor).

Gemäß einer weiteren Ausführungsform wird im Frequenzbereich eine Mischfrequenz des Mischsignals und/oder des digitalen Mischsignals bestimmt. Als Mischfrequenz kann beispielsweise der Frequenzanteil verwendet werden, welcher die stärkste Gewichtung im Mischsignal und/oder im digitalen Mischsignal besitzt. Basierend auf der bestimmten Mischfrequenz können die Beatfrequenz und die Distanz zu einem jeweiligen Objekt im Messbereich ermittelt werden. Die so bestimmte Distanz zum Objekt kann als Distanzmesswert ausgegeben werden.

Wie oben bereits angedeutet, führt sowohl die Mischung von Sende- und Empfangssignal als auch die Mischung der Beatfrequenz mit der Oszillatorfrequenz zur Erzeugung additiver und subtraktiver weiterer Frequenzen, wobei die additiven weiteren Frequenzen jeweils mittels eines Tiefpassfilters ausgefiltert werden, da diese Frequenzen nicht weiterverarbeitet werden.

Gemäß einer weiteren Ausführungsform wird der gewünschte Messbereich basierend auf einem empfangenen Datensignal, beispielsweise einem empfangenen Datensignal von peripheren Systemen und/oder Sensoren eingestellt. Derartige Sensoren können beispielsweise andere Distanzmesssensoren sein, die schon eine Grobmessung vornehmen und das Ergebnis der Grobmessung an die Distanzmessvorrichtung senden. Die Sensoren können beispielsweise LiDAR-, Radar-, Kamerasensoren oder jede andere Art von geeigneten Sensoren umfassen. Die peripheren Systeme können beispielsweise eine Kransteuerung umfassen, wobei durch die Kransteuerung schon eine ungefähre Position des Krans bekannt sein kann und der gewünschte Messbereich basierend auf der ungefähren Position des Krans eingestellt werden kann.

Gemäß einer weiteren Ausführungsform wird das Sende- und Empfangssignal über eine gemeinsame Optik gesendet und/oder empfangen. Die gemeinsame Optik kann einen Zirkulator umfassen, welcher den Sendelichtstrahl überwiegend in den Messbereich und zum Teil zu dem Lichtempfänger leitet und welcher das zurückgestrahlte Licht dem Lichtempfänger zuführt. Der Zirkulator kann also beispielsweise einen kleinen Teil des Sendelichtstrahls zum Lichtempfänger führen (z.B. zwischen 0,01 % und 1 % oder zwischen 1 % und 5% der Lichtleistung), sodass basierend auf dem kleinen Teil des Sendelichtstrahls und des Empfangssignals die Beatfrequenz bestimmt werden kann.

Die erfindungsgemäße Distanzmessvorrichtung kann auf eine Entfernung von 150 m beispielsweise eine Messgenauigkeit besser als 4 mm, 2 mm, 1 mm oder 0,5 mm aufweisen. Die Distanzmessvorrichtung kann einen Frequenzhub von zumindest 100 GHz, 200 GHz oder größer aufweisen. Die Beatfrequenz kann beispielsweise größer als 10 GHz, 20 GHz oder 40 GHz sein. Das gewünschte Messfenster kann kleiner als 2 m, 1 m oder 0,5 m sein. Diese Zahlenwerte dienen rein exemplarisch dazu, die möglichen verwendeten Frequenzen und erzielbaren Genauigkeiten zu veranschaulichen.

Weiterer Gegenstand der Erfindung ist eine Krananlage mit einem Kran. Die hierin erläuterte Distanzmessvorrichtung kann Teil der Krananlage sein. Der Kran ist bevorzugt ein Portalkran, insbesondere eine Containerbrücke. Die Distanzmessvorrichtung kann dabei derart angebracht sein, um eine Position zumindest eines bewegbaren Teils des Krans zu erfassen. Eine Kransteuerung kann ausgebildet sein, der Distanzmessvorrichtung eine (ungefähre) Position eines bewegbaren Teils des Krans als Datensignal zu übermitteln, woraufhin die Distanzmessvorrichtung den gewünschten Messbereich basierend auf der übermittelten Position einstellt.

Der Portalkran ist insbesondere ein Kran mit einem Gestell, welches zweispurig fahrbar aufgestellt ist. Zwei Stützen in den Seitenbereichen des Gestells sind bevorzugt durch eine Brücke verbunden, wobei eine Laufkatze auf der Brücke bewegbar angeordnet ist und sich quer zur zweispurigen Fahrtrichtung bewegt.

Von der Laufkatze kann ein Containergeschirr abgelassen werden, um an Containern einzuhaken und die Container zu transportieren. Die Distanzmessvorrichtung kann dazu dienen, beispielsweise die genaue Position eines Containergeschirrs und/oder eines zu transportierenden Containers zu ermitteln. Aus der Position des Containergeschirrs und/oder des Containers kann der Kran dann wiederum ableiten, ob das Containergeschirr relativ zum Container in der richtigen Position ist, um am Container einzuhaken.

Bei Kränen können im Betrieb sehr starke Vibrationen auftreten, für welche die Distanzmessvorrichtung nicht ausgelegt ist. Aus diesem Grund kann die Distanzmessvorrichtung gemäß einer Ausführungsform an einem nicht bewegbaren Teil, insbesondere des Krans oder der Krananlage, angebracht sein. Der nicht bewegbare Teil der Krananlage kann ein stationärer Teil des Krans oder der Krananlage sein. Durch die Positionierung der Distanzmessvorrichtung an einem stationären Teil der Krananlage können hohe Messentfernungen entstehen, die mittels der erfindungsgemäßen Distanzmessvorrichtung mit hoher Genauigkeit erfasst werden können.

Weiterer Gegenstand der Erfindung ist ein Bauwerk, beispielsweise eine Brücke oder eine Staumauer. Das Bauwerk umfasst die hier erläuterte Distanzmessvorrichtung. Die Distanzmessvorrichtung ist ausgebildet, zumindest eine Position (d.h. eine Distanz zur Distanzmessvorrichtung) eines Teils des Bauwerks wiederholt zu messen. Die Distanzmessvorrichtung kann beispielsweise geringfügige Änderungen der Position der Brücke (z.B. durch Belastungen durch Fahrzeuge) oder der Staumauer (z.B. bei erhöhtem Wasserdruck) erfassen. Hierbei müssen sehr genaue Messungen mit einer Messgenauigkeit von Millimetern in einer großen Entfernung (von z.B. 100m) durchgeführt werden, wofür sich die hier erläuterte Distanzmessvorrichtung besonders eignet.

Weiterer Gegenstand der Erfindung ist schließlich ein FMCW-LiDAR-Distanzmessverfahren, bei welchem
- ein frequenzmodulierter Sendelichtstahl als ein Sendesignal erzeugt und in einen Messbereich entsandt wird, wobei das Sendesignal einen vorbestimmtem Frequenzhub aufweist,
- von Objekten in dem Messbereich zurückgestrahltes Licht als Empfangssignal empfangen wird,
- zumindest ein Teil des Sendesignals mit dem Empfangssignal und mit einer Oszillatorfrequenz gemischt wird, um ein Mischsignal zu generieren,
- insbesondere die Oszillatorfrequenz an einen gewünschten Messbereich angepasst wird;
- wobei von einer Avalanche-Photodiode, APD, die Mischung zumindest eines Teils des Sendesignals und des Empfangssignals und einer mit der Oszillatorfrequenz beaufschlagten Vorspannung der APD durchgeführt wird.

Für das FMCW-LiDAR-Distanzmessverfahren gelten die Ausführungen zu der erfindungsgemäßen FMCW-LiDAR-Distanzmessvorrichtung entsprechend, dies gilt insbesondere hinsichtlich Vorteilen und Ausführungsformen.

Nachfolgend wird die Erfindung rein beispielhaft unter Bezugnahme auf die Zeichnungen dargestellt. Es zeigen:
- Fig. 1: schematisch den Aufbau einer FMCW-LiDAR-Distanzmessvorrichtung gemäß einer ersten Ausführungsform außerhalb des Schutzumfangs der Ansprüche;
- Fig. 2: schematisch die Laserfrequenzen des Sendesignals und des Empfangssignals;
- Fig. 3: eine zweite erfindungsgemäße Ausführungsform der FMCW-LiDAR-Distanzmessvorrichtung mit einer Avalanche-Photodiode (APD);
- Fig. 4: eine Krananlage mit der FMCW-LiDAR-Distanzmessvorrichtung;
- Fig. 5: eine Staumauer mit der FMCW-LiDAR-Distanzmessvorrichtung.

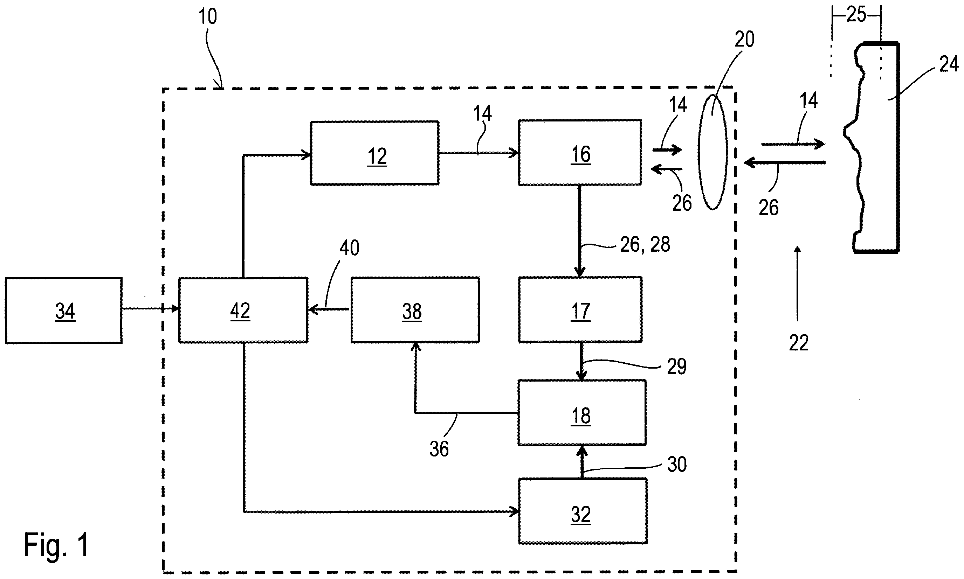

Fig. 1 zeigt eine FMCW-LiDAR-Distanzmessvorrichtung 10 gemäß einer ersten Ausführungsform außerhalb des Schutzumfangs der Ansprüche.

Die Distanzmessvorrichtung 10 umfasst einen Laser 12, welcher einen frequenzmodulierten Sendelichtstrahl als ein Sendesignal 14 mit einem vorab festgelegten Frequenzhub erzeugt. Ein Teil 28 des Sendesignals 14 wird über einen Zirkulator 16 an eine Photodiode 17 geleitet, während ein Großteil des Sendesignals 14 über den Zirkulator 16 und über eine Sende- und Empfangsoptik 20 in einen Messbereich 22 entsandt wird.

Das Sendesignal 14 trifft im Messbereich 22 auf ein Objekt 24 und wird vom Objekt 24 als Empfangssignal 26 zurückgestrahlt. Das Objekt 24 liegt in einem gewünschten Messbereich 25.

Über die Sende- und Empfangsoptik 20 und den Zirkulator 16 wird das Empfangssignal 26 ebenfalls an die Photodiode 17 geleitet, wo das Empfangssignal 26 zusammen mit dem Teil 28 des Sendesignals 14 zu einem vorläufigen Mischsignal 29 gemischt und das vorläufige Mischsignal 29 von einem nicht gezeigten Verstärker verstärkt wird.

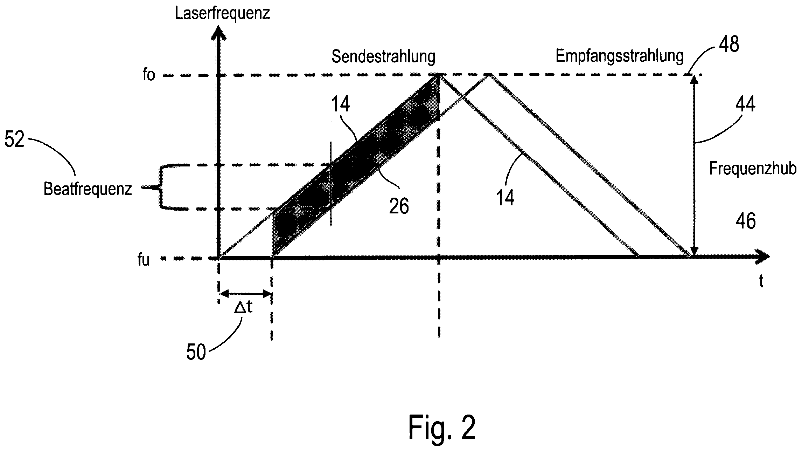

Eine im vorläufigen Mischsignal 29 durch die Mischung des Sendesignals 14 (bzw. des Teils 28 des Sendesignals 14) und des Empfangssignals 26 entstehende Differenzfrequenz, die Beatfrequenz 52 (Fig. 2), wird in einem Mischer 18 zusätzlich mit einer Oszillatorfrequenz 30, die von einem Lokaloszillator 32 bereitgestellt wird, gemischt, sodass die Beatfrequenz 52 in einen niedrigen Frequenzbereich heruntergemischt wird.

Die Oszillatorfrequenz 30 wird dabei entsprechend des gewünschten Messbereichs 25 angepasst. Der gewünschte Messbereich 25 kann beispielsweise von einem peripheren System 34 wie z.B. einer Kransteuerung oder anderen Distanzmesssensoren vorgegeben werden.

Eine Beatfrequenz 52 von beispielsweise 40 GHz, welche z.B. bei der Distanzmessung eines Objekts 24 in 150m Entfernung entsteht, kann mit einer Oszillatorfrequenz 30 von 40,1 GHz gemischt werden, sodass ein dabei entstehendes Mischsignal 36 eine Frequenz von lediglich 100 MHz aufweist. Additive Mischfrequenzen können mittels eines nicht gezeigten Tiefpassfilters unterdrückt werden.

Das Mischsignal 36 kann über einen ADC (Analog Digital Converter) 38 in ein digitales Mischsignal 40 gewandelt und mittels einer Steuereinheit 42, welche eine schnelle Fouriertransformation des digitalen Signals 40 durchführt, in den Frequenzbereich umgesetzt werden. Der Einsatz von teuren ADCs, die hohe Frequenzen verarbeiten, ist somit nicht notwendig.

Die Steuereinheit 42 kann zudem ausgebildet sein, das Ergebnis der Distanzmessung auszugeben und die Anpassung der Oszillatorfrequenz 30 basierend auf dem gewünschten Messbereich 25 vorzunehmen. Hierzu kann die Steuereinheit 42 mit dem peripheren System 34 über eine Datenverbindung gekoppelt sein.

Fig. 2 zeigt die Laserfrequenzen des Sendesignals 14 und des Empfangssignals 26. Der Frequenzhub 44 der beiden Signale erstreckt sich von einer unteren Frequenz (fu) 46 hin zu einer oberen Frequenz (fo) 48. Die Laserfrequenz des Sendesignals 14 und die Laserfrequenz des Empfangssignals 26 sind um ein Zeitintervall (Δt) 50 in x-Achsenrichtung und um eine Beatfrequenz 52 in y-Achsenrichtung versetzt.

Die entstehende Beatfrequenz 52 und auch die Frequenz des Mischsignals 36 sind direkt abhängig von dem Zeitintervall Δt 110, welches das Sendesignal benötigt hat, um die Stecke von der Distanzmessvorrichtung 10 hin zu dem Objekt 24 und von dem Objekt 24 zurück zur Distanzmessvorrichtung 10 zurückzulegen, und erlauben somit Rückschlüsse auf die Entfernung des Objekts 24.

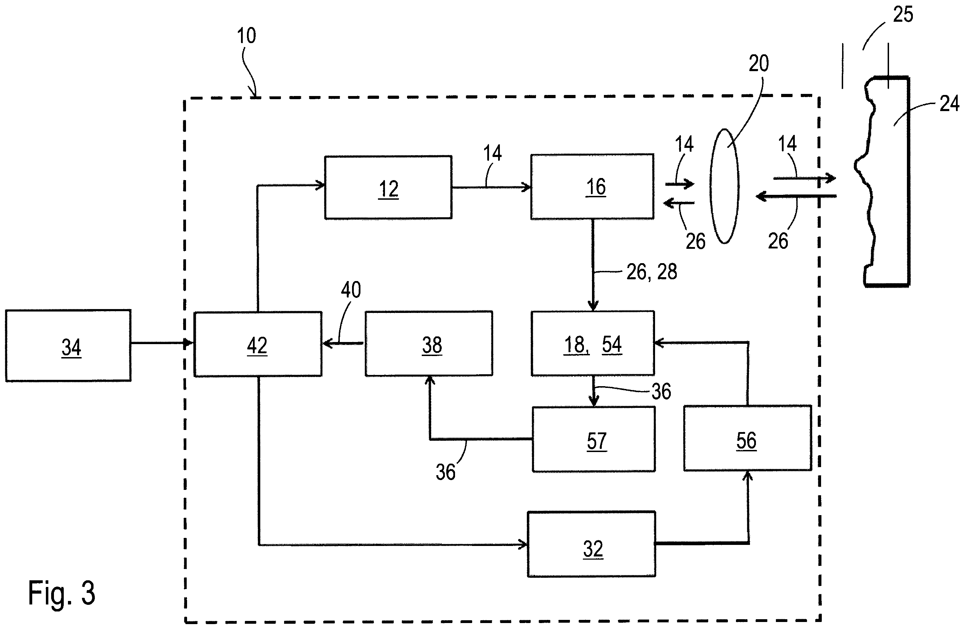

In Fig. 3 ist eine zweite erfindungsgemäße Ausführungsform der FMCW-LiDAR-Distanzmessvorrichtung 10 dargestellt, welche im Unterschied zur ersten Ausführungsform als Mischer 18 eine APD (Avalanche-Photodiode) 54 verwendet, die die Mischung des Sende- und Empfangssignals 14, 26 mit einer mit der Oszillatorfrequenz 30 beaufschlagten APD-Vorspannung 56 durchführt. In dieser erfindungsgemäßen Ausführungsform erfolgt die

Mischung zweier optischer Signale und eines elektrischen Signals in einem Bauteil, nämlich der APD 54. Die APD 54 liefert dementsprechend als Ausgangssignal das Mischsignal 36, welches wie in der ersten Ausführungsform dem ADC 38 zugeführt wird. Vor dem ADC 38 ist in Fig. 3 noch ein Verstärker 57 gezeigt, der das Mischsignal 36 verstärkt. Der Vorteil einer Ausführung mit APD 54 besteht darin, dass durch einen reduzierten Bauteileinsatz sowohl Platz als auch Kosten gespart werden.

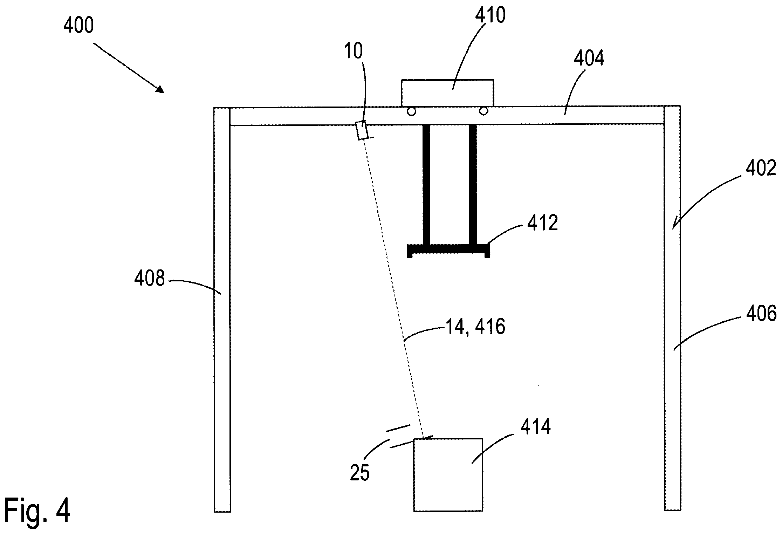

Fig. 4 zeigt eine Krananlage 400, in der die FMCW-LiDAR-Distanzmessvorrichtung 10 eingesetzt wird. Die Krananlage 400 umfasst einen Portalkran 402, eine Kranbrücke 404, zwei Stützen 406, 408, eine Laufkatze 410, ein Containergeschirr 412, einen Container 414 und die FMCW-LiDAR-Distanzmessvorrichtung 10, die den Sendelichtstrahl als Sendesignal 14 aussendet, um eine Messdistanz 416 zu messen.

Die FMCW-LiDAR-Distanzmessvorrichtung 10 ist an der Kranbrücke 404 angebracht, welche die beiden Stützen 406, 408 miteinander verbindet. Die Laufkatze 410 lässt sich über die Kranbrücke 404 verfahren, um eine Position entlang der Kranbrücke 404 einzunehmen. An der Laufkatze 410 ist das Containergeschirr 412 angeordnet, welches zum Aufnehmen und Absetzen des Containers 414 dient.

Die FMCW-LiDAR-Distanzmessvorrichtung 10 misst die Messdistanz 416 zwischen dem Container 414 und der Distanzmessvorrichtung 10 und übermittelt die gemessenen Daten an ein nicht gezeigtes Steuerungs- und Automatisierungssystem der Krananlage 400, welches die Bewegung des Containergeschirrs 412 steuert. Das Steuerungs- und Automatisierungssystem der Krananlage 400 kann Daten an die Distanzmessvorrichtung 10 übermitteln, welche Informationen über eine ungefähre Position oder Entfernung des zu vermessenden Objekts 24 (d.h. des Containers 414) umfassen. Diese Daten kann die Distanzmessvorrichtung 10 nutzen, um die Oszillatorfrequenz 30 der Distanzmessvorrichtung 10 so anzupassen, dass der gewünschte Messbereich 25 so eingestellt wird, dass das Andocken des Containergeschirrs 412 an den Container 414 überwacht werden kann.

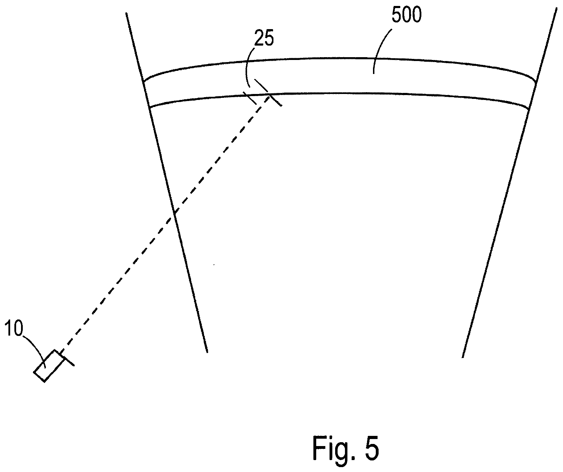

In Fig. 5 ist schematisch eine Staumauer 500 und eine Distanzmessvorrichtung 10 gezeigt. Die Distanzmessvorrichtung 10 erfasst die Distanz zu einem Teil der Staumauer 500 in regelmäßigen Abständen, um so eine Bewegung der Staumauer 500 zu identifizieren. Die Distanzmessvorrichtung 10 kann vorab auf einen gewünschten Messbereich 25 eingestellt werden, der es ermöglicht, geringfügige Bewegungen der Staumauer 500 zu erfassen. Die Distanzmessvorrichtung 10 kann Messdaten an ein nicht gezeigtes Warnsystem der Staumauer 500 übermitteln, welches bei einer Überschreitung eines Schwellenwertes hinsichtlich der Bewegung der Staumauer 500 ein Warnsignal ausgibt.

### Bezugszeichenliste

- 10: FMCW-LiDAR-Distanzmessvorrichtung
- 12: Laser
- 14: Sendesignal
- 16: Zirkulator
- 17: Photodiode
- 18: Mischer
- 20: Sende- und Empfangoptik
- 22: Messbereich
- 24: Objekt
- 25: gewünschter Messbereich
- 26: Empfangssignal
- 28: Teil des Sendesignals
- 29: vorläufiges Mischsignal
- 30: Oszillatorfrequenz
- 32: Lokaloszillator
- 34: Peripheres System
- 36: Mischsignal
- 38: ADC
- 40: Digitales Mischsignal
- 42: Steuereinheit
- 44: Frequenzhub
- 46: Untere Frequenz
- 48: Obere Frequenz
- 50: Zeitintervall Δt
- 52: Beatfrequenz
- 54: APD
- 56: APD-Vorspannung
- 57: Verstärker

- 400: Krananlage
- 402: Portalkran
- 404: Kranbrücke
- 406, 408: Stützen
- 410: Laufkatze
- 412: Containergeschirr
- 414: Container
- 416: Messdistanz

- 500: Staumauer

## Patentansprüche

1. FMCW-LiDAR-Distanzmessvorrichtung (10), umfassend:
eine Lichtquelle, insbesondere einen Laser (12), der einen frequenzmodulierten Sendelichtstrahl als ein Sendesignal (14) mit einem vorbestimmten Frequenzhub (44) erzeugt und in einen Messbereich (22) entsendet;
einen Lichtempfänger (17, 54), der ausgebildet ist, von Objekten (24) in dem Messbereich (22) zurückgestrahltes Licht als Empfangssignal (26) zu empfangen;
einen Mischer (18, 54), der ausgebildet ist, zumindest einen Teil (28) des Sendesignals (14) mit dem Empfangssignal (26) und mit einer Oszillatorfrequenz (30) zu mischen, um ein Mischsignal (36) zu generieren,
wobei die Distanzmessvorrichtung (10) ausgebildet ist, die Oszillatorfrequenz (30) an einen gewünschten Messbereich (25) anzupassen;
**dadurch gekennzeichnet, dass** der Mischer (18, 54) eine Avalanche-Photodiode, APD (54), umfasst,
welche ausgebildet ist, die Mischung zumindest eines Teils (28) des Sendesignals (14) und des Empfangssignals (26) und einer mit der Oszillatorfrequenz (30) beaufschlagten Vorspannung (56) der APD (54) durchzuführen.

2. FMCW-LiDAR-Distanzmessvorrichtung (10) nach Anspruch 1,
wobei die Distanzmessvorrichtung (10) ausgebildet ist, im Betrieb zwischen zumindest zwei gewünschten Messbereichen (25) umzuschalten und die Oszillatorfrequenz (30) an den gerade gültigen gewünschten Messbereich (25) anzupassen.

3. FMCW-LiDAR-Distanzmessvorrichtung (10) nach zumindest einem der vorstehenden Ansprüche,
wobei der Frequenzhub (44) des frequenzmodulierten Sendelichtstrahls eine periodische, stückweise lineare Form aufweist.

4. FMCW-LiDAR-Distanzmessvorrichtung (10) nach zumindest einem der vorstehenden Ansprüche,
wobei die Distanzmessvorrichtung (10) einen Analog-Digital-Converter, ADC (38), aufweist, welcher das Mischsignal (36) in ein digitales Mischsignal (40) überführt, wobei die Distanzmessvorrichtung (10) bevorzugt ausgebildet ist, das digitale Mischsignal (40) mittels einer schnellen Fouriertransformation in den Frequenzbereich zu überführen, wobei im Frequenzbereich eine Mischfrequenz des Mischsignals (36) und/oder des digitalen Mischsignals (40) bestimmt wird, wobei eine Distanz zu einem Objekt (24) im Messbereich (22) basierend auf der Mischfrequenz ermittelt wird.

5. FMCW-LiDAR-Distanzmessvorrichtung (10) nach Anspruch 4,
wobei die Distanzmessvorrichtung ausgebildet ist, eine Modulationszeitdauer, eine Messdauer, eine Samplingfrequenz des ADCs und die Oszillatorfrequenz unabhängig oder in Abhängigkeit voneinander an den gewünschten Messbereich anzupassen.

6. FMCW-LiDAR-Distanzmessvorrichtung (10) nach Anspruch 5,
wobei die Distanzmessvorrichtung ausgebildet ist, die Modulationszeitdauer, die Messdauer, die Samplingfrequenz des ADCs und die Oszillatorfrequenz in einer ersten Phase an einen größeren gewünschten Messbereich und in einer darauffolgenden zweiten Phase an einen kleineren gewünschten Messbereich anzupassen.

7. FMCW-LiDAR-Distanzmessvorrichtung (10) nach einem der vorstehenden Ansprüche,
wobei die Distanzmessvorrichtung (10) ausgebildet ist, den gewünschten Messbereich (14) basierend auf einem empfangenen Datensignal, beispielsweise von peripheren Systemen und/oder Sensoren, einzustellen.

8. FMCW-LiDAR-Distanzmessvorrichtung (10) nach zumindest einem der vorstehenden Ansprüche,
wobei das Sendesignal (14) und Empfangssignal (26) über eine gemeinsame Optik (20) gesendet und/oder empfangen werden, wobei die gemeinsame Optik (20) einen Zirkulator (16) umfasst, welcher den Sendelichtstrahl überwiegend in den Messbereich (22) und zum Teil (28) zu dem Lichtempfänger (17, 54) leitet und welcher das zurückgestrahlte Licht dem Lichtempfänger (17, 54) zuführt.

9. Krananlage (400), bevorzugt Portalkran (402), insbesondere Containerbrücke (404), umfassend einen Kran und eine FMCW-LiDAR-Distanzmessvorrichtung (10) gemäß zumindest einem der vorstehenden Ansprüche, wobei die Distanzmessvorrichtung (10) derart angebracht ist, um eine Position zumindest eines bewegbaren Teils des Krans zu erfassen, wobei eine Kransteuerung der Distanzmessvorrichtung (10) eine Position des bewegbaren Teils des Krans übermittelt und die Distanzmessvorrichtung (10) basierend auf der Position den gewünschten Messbereich (25) einstellt.

10. Bauwerk, beispielsweise Brücke oder Staumauer (500), umfassend eine FMCW-LiDAR-Distanzmessvorrichtung (10) gemäß zumindest einem der Ansprüche 1 bis 8,
wobei die Distanzmessvorrichtung (10) ausgebildet ist, zumindest eine Position eines Teils des Bauwerks wiederholt zu messen.

11. FMCW-LiDAR-Distanzmessverfahren (10), bei welchem ein frequenzmodulierter Sendelichtstahl als ein Sendesignal (14) erzeugt und in einen Messbereich (22) entsandt wird, wobei das Sendesignal (14) einen vorbestimmtem Frequenzhub (44) aufweist,
von Objekten (24) in dem Messbereich (22) zurückgestrahltes Licht als Empfangssignal (26) empfangen wird,
zumindest ein Teil (28) des Sendesignals (14) mit dem Empfangssignal (26) und mit einer Oszillatorfrequenz (30) gemischt wird, um ein Mischsignal (36) zu generieren,
die Oszillatorfrequenz (30) an einen gewünschten Messbereich (25) angepasst wird,
**dadurch gekennzeichnet, dass**
von einer Avalanche-Photodiode, APD, die Mischung zumindest eines Teils (28) des Sendesignals (14) und des Empfangssignals (26) und einer mit der Oszillatorfrequenz (30) beaufschlagten Vorspannung (56) der APD (54) durchgeführt wird.

## Claims

1. An FMCW LiDAR distance measurement apparatus (10) comprising:
a light source, in particular a laser (12), which generates a frequency modulated transmission light beam as a transmission signal (14) having a predetermined frequency deviation (44) and transmits said frequency modulated transmission light beam into a measurement zone (22);
a light receiver (17, 54) which is configured to receive light reflected by objects (24) in the measurement zone (22) as a reception signal (26); and
a mixer (18, 54) which is configured to mix at least a portion (28) of the transmission signal (14) with the reception signal (26) and with an oscillator frequency (30) to generate a mixed signal (36),
wherein the distance measurement apparatus (10) is configured to adapt the oscillator frequency (30) to a desired measurement zone (25),
**characterized in that**
the mixer (18, 54) comprises an avalanche photodiode, APD (54), which is configured to perform the mixing of at least a portion (28) of the transmission signal (14) and the reception signal (26) and a bias voltage (56) of the APD (54) acted on by the oscillator frequency (30).

2. An FMCW LiDAR distance measurement apparatus (10) in accordance with claim 1,
wherein the distance measurement apparatus (10) is configured to switch between at least two desired measurement zones (25) during operation and to adapt the oscillator frequency (30) to the currently valid desired measurement zone (25).

3. An FMCW LiDAR distance measurement apparatus (10) in accordance with at least one of the preceding claims,
wherein the frequency deviation (44) of the frequency modulated transmission light beam has a periodic, piecewise linear shape.

4. An FMCW LiDAR distance measurement apparatus (10) in accordance with at least one of the preceding claims,
wherein the distance measurement apparatus (10) has an analog-to-digital converter, ADC (38), which converts the mixed signal (36) into a digital mixed signal (40), wherein the distance measurement apparatus (10) is preferably configured to convert the digital mixed signal (40) into the frequency range by means of a fast Fourier transformation, wherein a mixing frequency of the mixed signal (36) and/or of the digital mixed signal (40) is determined in the frequency range, wherein a distance from an object (24) in the measurement zone (22) is determined based on the mixing frequency.

5. An FMCW LiDAR distance measurement apparatus (10) in accordance with claim 4,
wherein the distance measurement apparatus is configured to adapt a modulation time duration, a measurement duration, a sampling frequency of the ADC, and the oscillator frequency to the desired measurement zone independently of one another or in dependence on one another.

6. An FMCW LiDAR distance measurement apparatus (10) in accordance with claim 5,
wherein the distance measurement apparatus is configured to adapt the modulation time duration, the measurement duration, the sampling frequency of the ADC, and the oscillator frequency in a first phase to a larger desired measurement zone and in a subsequent second phase to a smaller desired measurement zone.

7. An FMCW LiDAR distance measurement apparatus (10) in accordance with any one of the preceding claims,
wherein the distance measurement apparatus (10) is configured to set the desired measurement zone (14) based on a received data signal, for example, from peripheral systems and/or sensors.

8. An FMCW LiDAR distance measurement apparatus (10) in accordance with at least one of the preceding claims,
wherein the transmission signal (14) and the reception signal (26) are transmitted and/or received via a common optics (20), wherein the common optics (20) comprises a circulator (16) which guides the transmission light beam predominantly into the measurement zone (22) and partly (28) to the light receiver (17, 54) and which supplies the reflected light to the light receiver (17, 54).

9. A crane system (400), preferably a gantry crane (402), in particular a container gantry crane (404), comprising a crane and an FMCW-LiDAR distance measurement apparatus (10) in accordance with at least one of the preceding claims, wherein the distance measurement apparatus (10) is attached in such a manner to detect a position of at least one movable part of the crane, wherein a crane control transmits a position of the movable part of the crane to the distance measurement apparatus (10) and the distance measurement apparatus (10) sets the desired measurement zone (25) based on the position.

10. A construction structure, for example a bridge or a dam (500), comprising an FMCW LiDAR distance measurement apparatus (10) in accordance with at least one of the claims 1 to 8,
wherein the distance measurement apparatus (10) is configured to repeatedly measure at least one position of a part of the construction structure.

11. An FMCW LiDAR distance measurement method (10) in which
a frequency modulated transmission light beam is generated as a transmission signal (14) and is transmitted into a measurement zone (22), wherein the transmission signal (14) has a predetermined frequency deviation (44),
light reflected by objects (24) in the measurement zone (22) is received as a reception signal (26),
at least a portion (28) of the transmission signal (14) is mixed with the reception signal (26) and with an oscillator frequency (30) to generate a mixed signal (36),
the oscillator frequency (30) is adapted to a desired measurement zone (25),
**characterized in that**
the mixing of at least a portion (28) of the transmission signal (14) and the reception signal (26) and a bias voltage (56) of the APD (54) acted on by the oscillator frequency (30) is performed by an avalanche photodiode, APD.

## Revendications

1. Dispositif de mesure de distance FMCW-LiDAR (10), comprenant :
une source de lumière, en particulier un laser (12), qui génère un faisceau lumineux d'émission, modulé en fréquence, en tant que signal d'émission (14) avec une excursion de fréquence prédéterminée (44), et qui l'envoie dans une zone de mesure (22) ;
un récepteur de lumière (17, 54) conçu pour recevoir la lumière, renvoyée par des objets (24) dans la zone de mesure (22), en tant que signal de réception (26) ;
un mélangeur (18, 54) conçu pour mélanger au moins une partie (28) du signal d'émission (14) avec le signal de réception (26) et avec une fréquence d'oscillateur (30), afin de générer un signal mixte (36),
le dispositif de mesure de distance (10) étant conçu pour adapter la fréquence d'oscillateur (30) à une plage de mesure souhaitée (25) ;
**caractérisé en ce que**
le mélangeur (18, 54) comprend une photodiode à avalanche, APD (54), qui est conçue pour effectuer le mélange d'au moins une partie (28) du signal d'émission (14) et du signal de réception (26) et d'une tension de polarisation (56) de l'APD (54) soumise à la fréquence d'oscillateur (30).

2. Dispositif de mesure de distance FMCW-LiDAR (10) selon l'une au moins des revendications précédentes,
dans lequel le dispositif de mesure de distance (10) est conçu pour commuter en fonctionnement entre au moins deux plages de mesure souhaitées (25) et pour adapter la fréquence d'oscillateur (30) à la plage de mesure souhaitée (25) actuellement valable.

3. Dispositif de mesure de distance FMCW-LiDAR (10) selon l'une au moins des revendications précédentes,
dans lequel l'excursion de fréquence (44) du faisceau lumineux d'émission modulé en fréquence présente une forme périodique localement linéaire.

4. Dispositif de mesure de distance FMCW-LiDAR (10) selon l'une au moins des revendications précédentes,
dans lequel le dispositif de mesure de distance (10) comprend un convertisseur analogique-numérique, CAN (38), qui transforme le signal mixte (36) en un signal mixte numérique (40),
le dispositif de mesure de distance (10) est de préférence conçu pour transformer le signal mixte numérique (40) dans le domaine fréquentiel au moyen d'une transformation de Fourier rapide,
une fréquence mixte du signal mixte (36) et/ou du signal mixte numérique (40) est déterminée dans le domaine fréquentiel,
une distance par rapport à un objet (24) dans la zone de mesure (22) est déterminée sur la base de la fréquence mixte.

5. Dispositif de mesure de distance FMCW-LiDAR (10) selon la revendication 4,
dans lequel le dispositif de mesure de distance est conçu pour adapter une durée de modulation, une durée de mesure, une fréquence
d'échantillonnage du CAN et la fréquence d'oscillateur à la plage de mesure souhaitée, indépendamment ou en fonction les unes des autres.

6. Dispositif de mesure de distance FMCW-LiDAR (10) selon la revendication 5,
dans lequel le dispositif de mesure de distance est conçu pour adapter la durée de modulation, la durée de mesure, la fréquence d'échantillonnage du CAN et la fréquence d'oscillateur, dans une première phase, à une plage de mesure souhaitée plus grande et, dans une deuxième phase suivante, à une plage de mesure souhaitée plus petite.

7. Dispositif de mesure de distance FMCW-LiDAR (10) selon l'une des revendications précédentes,
dans lequel le dispositif de mesure de distance (10) est conçu pour régler la plage de mesure souhaitée (14) en se basant sur un signal de données reçu, provenant par exemple de systèmes et/ou de capteurs périphériques.

8. Dispositif de mesure de distance FMCW-LiDAR (10) selon l'une au moins des revendications précédentes,
dans lequel le signal d'émission (14) et le signal de réception (26) sont émis et/ou reçus par l'intermédiaire d'une optique commune (20), l'optique commune (20) comprenant un circulateur (16) qui dirige le faisceau lumineux d'émission majoritairement dans la zone de mesure (22) et en partie (28) vers le récepteur de lumière (17, 54) et qui amène la lumière renvoyée au récepteur de lumière (17, 54).

9. Installation de grue (400), de préférence grue à portique (402), en particulier portique à conteneurs (404), comprenant une grue et un dispositif de mesure de distance FMCW-LiDAR (10) selon l'une au moins des revendications précédentes,
dans laquelle le dispositif de mesure de distance (10) est monté de manière à détecter une position d'au moins une partie mobile de la grue,
une commande de grue transmet au dispositif de mesure de distance (10) une position de la partie mobile de la grue, et
le dispositif de mesure de distance (10) règle la plage de mesure souhaitée (25) en se basant sur ladite position.

10. Ouvrage, par exemple un pont ou un barrage (500), comprenant un dispositif de mesure de distance FMCW-LiDAR (10) selon l'une au moins des revendications 1 à 8,
dans lequel le dispositif de mesure de distance (10) est conçu pour mesurer de manière répétée au moins une position d'une partie de l'ouvrage.

11. Procédé de mesure de distance FMCW-LiDAR (10), dans lequel
un faisceau lumineux d'émission modulé en fréquence est généré en tant que signal d'émission (14) et est envoyé dans une zone de mesure (22), le signal d'émission (14) présentant une excursion de fréquence prédéterminée (44),
la lumière renvoyée par des objets (24) dans la zone de mesure (22) est reçue en tant que signal de réception (26),
au moins une partie (28) du signal d'émission (14) est mélangée avec le signal de réception (26) et avec une fréquence d'oscillateur (30), afin de générer un signal mixte (36),
la fréquence d'oscillateur (30) est adaptée à une plage de mesure souhaitée (25),
**caractérisé en ce que**
une photodiode à avalanche, APD, effectue le mélange d'au moins une partie (28) du signal d'émission (14) et du signal de réception (26) et d'une tension de polarisation (56) de l'APD (54) soumise à la fréquence d'oscillateur (30).
